(19) Europäisches Patentamt
European Patent Office
Office européen des brevets

(11) **EP 1 893 976 B1**

(12) **FASCICULE DE BREVET EUROPEEN**

(45) Date de publication et mention de la délivrance du brevet:
**04.10.2017 Bulletin 2017/40**

(51) Int Cl.:
***G01N 21/17*** *(2006.01)*

(21) Numéro de dépôt: **06778618.6**

(22) Date de dépôt: **19.06.2006**

(86) Numéro de dépôt international:
**PCT/FR2006/001386**

(87) Numéro de publication internationale:
**WO 2006/136690 (28.12.2006 Gazette 2006/52)**

(54) **DISPOSITIF ET PROCÉDÉ DE CARACTÉRISATION DE STRUCTURE PAR EFFET DE LONGUEUR D'ONDE DANS UN SYSTEME PHOTO-ACOUSTIQUE**

VORRICHTUNG UND VERFAHREN ZUR CHARAKTERISIERUNG EINER STRUKTUR MITTELS WELLENLÄNGENEFFEKT IN EINEM PHOTOAKUSTISCHEN SYSTEM

DEVICE AND METHOD FOR CHARACTERISING A STRUCTURE BY WAVELENGTH EFFECT IN A PHOTOACOUSTIC SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.06.2005 FR 0551673**

(43) Date de publication de la demande:
**05.03.2008 Bulletin 2008/10**

(73) Titulaire: **CENTRE NATIONAL DE LA RECHERCHE SCIENTIFIQUE -CNRS- 75794 Paris Cedex 16 (FR)**

(72) Inventeurs:
• **DEVOS, Arnaud**
  **F-59320 Ennetières-en-Weppes (FR)**
• **CARUYER, Grégory**
  **F-38570 Goncelin (FR)**

(74) Mandataire: **Novagraaf Technologies Bâtiment O2 2, rue Sarah Bernhardt CS90017 92665 Asnières-sur-Seine Cedex (FR)**

(56) Documents cités:
**US-A- 4 710 030    US-A1- 2004 174 538**

• **DEVOS, A: "Giant oscillations in the picosecond ultrasonics response of crystalline silicon: Connection with the electronic structure" WORLD CONGRESS ON ULTRASONICS, 2003, pages 1197-1200, XP002385317**
• **LIM, D: "Coherent optical and acoustic phonon generation correlated with the charge-ordering phase transition in La1-xCaxMnO3" PHYSICS REVIEW LETTERS, vol. 86, no. 12, avril 2005 (2005-04), pages 2669-2672, XP002385318**
• **COTE, R & DEVOS A: "Strong picosecond ultrasonic responses of semiconductors probed close to interband transitions" PHYSICA STATUS SOLIDI, vol. 1, no. 11, 2004, pages 2741-2744, XP002385319**

**Description**

La présente invention se rapporte au domaine des procédés de mesure des propriétés des structures.

La présente invention se rapporte plus particulièrement à un procédé pour la caractérisation de structure par onde acoustique générée et détectée par impulsion lumineuse. Ce procédé utilise la mesure des différentes réflexions et propagations de l'onde dans la structure.

L'art antérieur connaît déjà le brevet américain US 5,748,318 dans lequel on décrit un système pour la caractérisation des films minces et des interfaces entre de tels films à travers la mesure de leurs propriétés mécaniques et thermiques. Dans le système décrit, la lumière est absorbée dans la couche mince ou dans une structure faite d'une pluralité de couches minces, et les modifications de réflexion ou de transmission optiques sont analysées. Le changement de réflexion ou de transmission est utilisé pour fournir des informations sur les ondes ultrasonores produites dans la structure. De la sorte, il est possible de déterminer l'épaisseur des couches ainsi que plusieurs propriétés optiques de la structure.

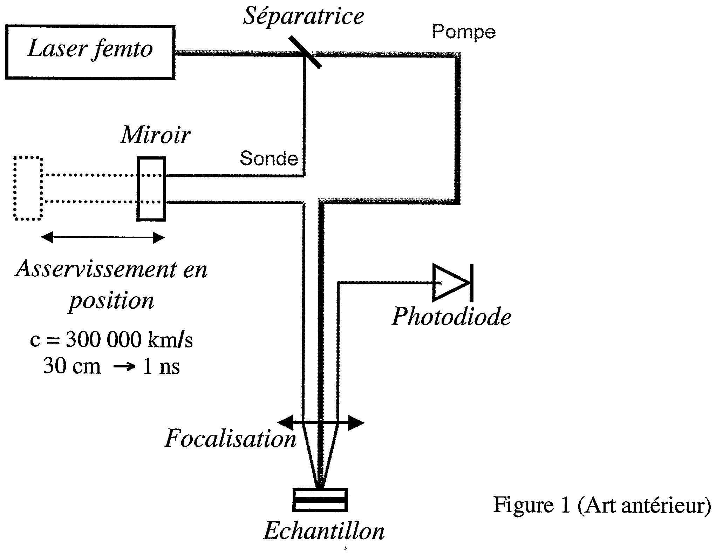

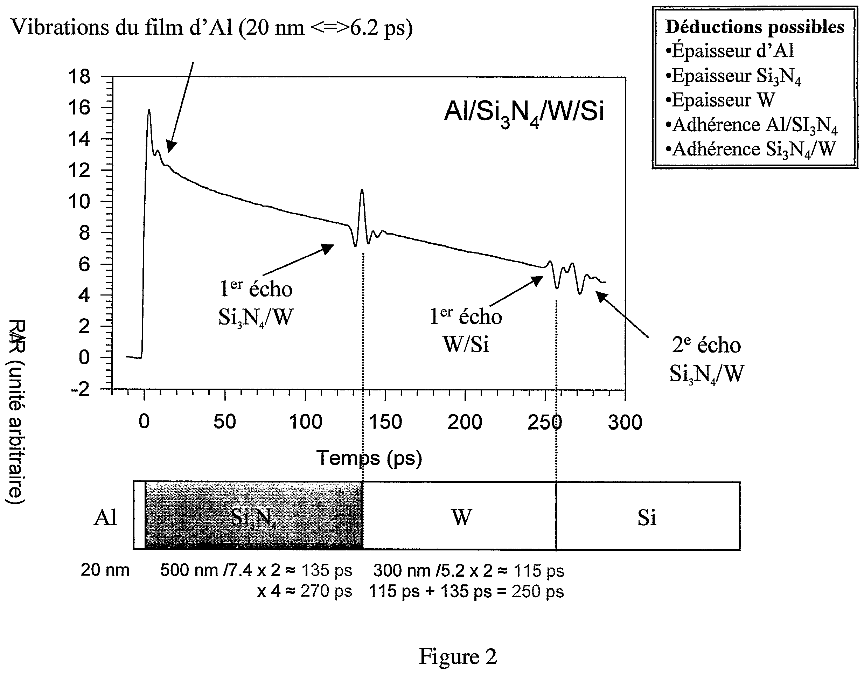

Le brevet précité est un exemple de mise en oeuvre d'un système pompe sonde connu de l'homme du métier et décrit de façon générale sur la figure 1 illustrant un exemple de dispositif connu. Sur cette figure, la source lumineuse est un laser à impulsions courtes (par exemple femtoseconde) émettant une onde de longueur d'onde fixée, produisant un premier faisceau, que l'on sépare par une séparatrice en un faisceau dit « pompe », et un faisceau dit « sonde ». On fait ensuite varier le chemin optique du faisceau « sonde » par un miroir asservi en position. Il est alors connu que les propriétés de la structure sous l'effet des faisceaux émis provoquent une modification dans les propriétés de réflexion (ou de transmission) de l'onde sonde. En particulier, comme illustré figure 2, de nouveau de façon connue en soi, on observe sur un graphique donnant la modification de réflexion en fonction du temps, des échos caractéristiques des interfaces d'une structure. L'analyse du signal à écho permet alors de déduire par exemple l'épaisseur du matériau, si l'on connaît la vitesse de propagation de l'onde sonore dans le milieu.

Cependant, selon cette méthode, il n'est pas possible d'accéder à la fois à la vitesse de propagation et à l'épaisseur de la structure.

Afin d'augmenter le nombre de caractéristiques extraites, et en particulier à la fois la vitesse et l'épaisseur, on a décrit dans la publication « Evidence of Laser-Wavelength effect in Picosecond Ultrasonics : Possible connection with interband transition » (Physics Review Letters, 12 Mars 2001, Volume 86, Numéro 12), ou dans la publication "Giant oscillations in the picosecond ultrasonic response of crystalline silicon: connection with the electronic structure" (XP 00 23 85 317), selon laquelle le préambule de la revendication 1 est rédigé, l'utilisation d'un dispositif pompe-sonde tel que décrit précédemment, mais associé cette fois à un laser accordable en longueur d'onde, permettant ainsi de faire varier la longueur d'onde des signaux émis.

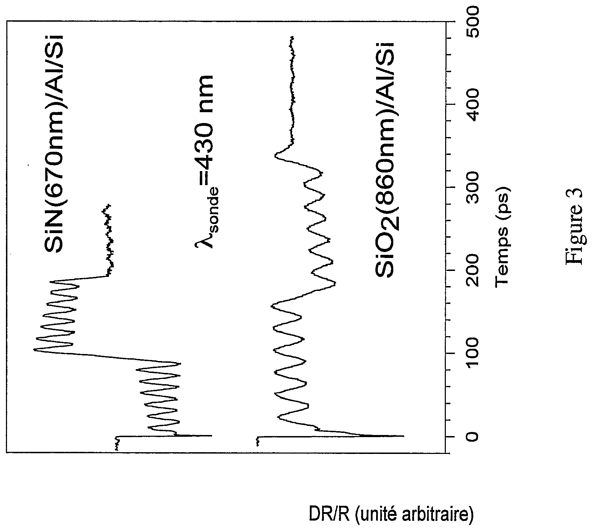

Grâce à ces effets de longueur d'onde, il est alors possible d'accéder à la fois à des caractéristiques d'épaisseur et à des caractéristiques de vitesse pour certains types de structure. En effet, comme décrit dans la publication « A Novel Approach using picosecond ultrasonics at variable laser-wavelength for the characterization of Aluminium nitride Films used for microsystem applications » (A. DEVOS, G. CARUYER, C. ZINCK et P. ANCEY, « A novel approach using picosecond ultrasonics at variable laser-wavelength for the characterization of AIN films used for microsystem applications », World Congress on Ultrasonics (Paris 7-10 Septembre 2003), pp. 793-796 ISBN 2-9521105-0-6), pour une structure transparente au faisceau sonde, une interaction acousto-optique apparaît au sein du matériau provoquant l'apparition d'oscillations au lieu des simples impulsions observées par écho. Ces oscillations, dites oscillations de « Brillouin » ont une période dépendant de la longueur d'onde de la sonde et de la vitesse du son dans le matériau. Elles sont illustrées figure 3 pour deux échantillons de SiN/Al/Si et $SiO_2$/Al/Si. Dans cet exemple, on comprendra que les matériaux et les épaisseurs distinguent ces deux échantillons de sorte que les oscillations Brillouin n'ont pas la même période à la même longueur d'onde pour le signal de sonde (430 nm). L'homme du métier comprendra que la mesure de la période des oscillations Brillouin donne une information sur la vitesse du son du matériau et ce indépendamment de l'épaisseur de la couche. Lorsque l'onde acoustique atteint la surface libre, elle s'y réfléchit en changeant le signe de la déformation. Cela se traduit par l'apparition d'un saut de réflectivité. En effet, l'onde acoustique générée en profondeur par le faisceau « pompe » transporte un infime changement de l'épaisseur de la couche dont le signe change à la réflexion. Ce changement est détecté optiquement car la couche transparente agit alors comme un interféromètre de Pérot-Fabry, comme ceci est montré dans la publication « Ultrafast vibration and laser acoustics in thin transparent films » O. B. Wright and T. Hyoguchi, Optics Letters, Vol. 16, page 1529 (1991).

De tels sauts de réflectivité sont illustrés figure 3. On note que les oscillations Brillouin peuvent se prolonger de part et d'autre du saut de réflectivité. L'homme du métier comprendra alors que la mesure du temps d'apparition d'un saut donne une information sur l'épaisseur du matériau, alors que la mesure de la période de ces oscillations donne une information sur la vitesse de propagation.

Pour un matériau comme l'AIN, on a montré des taux d'erreur sur l'épaisseur de l'ordre de 6%, en employant la période des oscillations et la position d'un écho acoustique.

Un objet de la présente invention et de réduire encore le taux d'erreur sur les données mesurées, tout en gardant la possibilité d'accéder à la fois à des valeurs d'épaisseur et de vitesse.

La présente invention entend donc solutionner ces inconvénients de l'art antérieur en utilisant en particulier les effets de longueur d'onde, par exemple grâce à un laser accordable.

Pour ce faire, la présente invention se rapporte à un dispositif de caractérisation d'une structure selon la revendication 1.

Selon un mode de réalisation, afin d'obtenir une source dont la longueur d'onde peut varier, on utilise au moins une source laser accordable. On peut en particulier utiliser deux sources laser accordables, ou bien une source fixe et une source accordable.

Selon un autre mode de réalisation, la variation de longueur d'onde est obtenue par un moyen d'émission d'un continuum de lumière.

Afin de pouvoir observer des sauts de réflectivité selon l'invention, ledit second rayonnement de sonde est choisi de sorte à pouvoir à interagir avec au moins deux interfaces de couches de ladite structure.

Afin d'assurer la bonne transmission des signaux lumineux sur une pluralité de longueur d'onde, le dispositif selon l'invention comprend de préférence en outre un ensemble de moyens optiques adaptés pour transmettre lesdits rayonnements sur une gamme de longueur d'onde correspondant auxdites différentes longueurs d'onde.

L'invention concerne également un procédé de caractérisation d'une structure selon la revendication 11.

Aux fins de la présente demande, le terme de saut correspond à une zone d'analyse présentant une forte variation de la valeur moyenne de la réflectivité. L'amplitude d'un saut est alors la différence de ces valeurs moyennes de part et d'autre de cette zone.

En présence d'oscillations de Brillouin, le calcul de la valeur moyenne est réalisé sur une durée correspondant sensiblement à une période d'oscillation de Brillouin.

On comprendra mieux l'invention à l'aide de la description, faite ci-après à titre purement explicatif, d'un mode de réalisation de l'invention, en référence aux figures annexées où :

- la figure 1 illustre de façon générale un dispositif pompe-sonde tel qu'il est connu de l'art antérieur;
- la figure 2 illustre un exemple de résultat obtenu par un dispositif pompe-sonde de la figure 1.
- la figure 3 illustre un exemple de caractérisation par oscillation de Brillouin et saut de réflectivité tel qu'il est connu de l'art antérieur;
- les figures 4a et 4b illustrent un exemple de mesure de sauts de réflectivité dans la zone d'oscillation de Brillouin pour différentes longueur d'onde ;
- la figure 5 illustre un exemple de modèle théorique de variation de l'amplitude de saut en fonction de la longueur d'onde ; et
- la figure 6 illustre un exemple d'un mode de réalisation de l'invention.

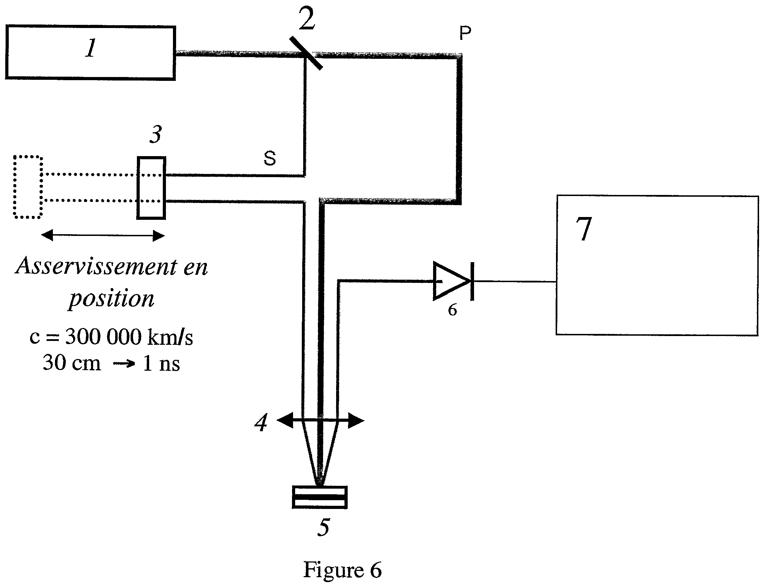

Illustré figure 6, le dispositif selon l'invention comprend une source laser 1 à impulsions courtes.

Les impulsions courtes de la source doivent être adaptées à la résolution temporelle désirée. Des impulsions de l'ordre de 1 ps ou de 0,1 ps sont envisageable.

Selon un premier mode de réalisation, cette source est accordable en longueur d'onde par l'intermédiaire d'un oscillateur accordable de type Titane :saphir pouvant produire des impulsions de 120 fs à un taux de répétition de 76 MHz centré sur une longueur d'onde accordable entre 700 nm et 990 nm.

Cette source produit un signal qui est séparé par une séparatrice 2 en un signal de pompe P et un signal de sonde S, tous deux destinés à interagir avec la structure 5 à analyser. Le signal de sonde S est soumis à une variation de chemin optique par rapport au signal de pompe P par exemple par l'intermédiaire d'un miroir mobile 3 asservi en position. Il est ensuite focalisé sur la structure 5 par une optique 4, et est réfléchi vers un moyen de détection 6, par exemple de type photodétecteur, destiné à générer un signal pouvant être analyser par des moyens de calcul et de traitement 7. Il est entendu que le signal de sonde peut également être détecté en transmission à travers la structure 5.

Afin de permettre le bon trajet des signaux de la source à la structure, l'optique est adaptée à la variation de longueur d'onde issue de la source. L'homme du métier est apte à adapter cette optique selon les sources et les gammes de longueur d'onde choisies, et on ne donne ici que quelques exemples d'optiques utilisables.

Les optiques doivent être de préférence large bande, autant pour les miroirs que pour les lentilles traitées. Pour atteindre un rapport signal sur bruit suffisant, les expériences pompe-sonde emploie une modulation du faisceau pompe et une démodulation de la sonde. La modulation doit être réalisée en dehors de la plage de bruit du laser, typiquement quelques 100 kHz. Elle est réalisée par un modulateur acousto-optique qui agit comme un réseau commandé électriquement. La diffraction du faisceau pompe par ce réseau va évoluer avec la longueur d'onde. Ainsi en changeant de longueur d'onde le faisceau pompe voit sa direction évoluer si bien qu'il est possible que le dispositif perde son réglage. On peut donc employer un modulateur acousto-optique qu'il est possible de commander avec un signal électrique de fréquence variable. On compense ainsi la déviation du faisceau en changeant le pas du réseau généré électriquement.

Dans le cas de l'emploi d'une longueur d'onde moitié qui est obtenue par doublage optique dans un cristal non linéaire, par exemple de type BBO (Beta Barium Borate), le doublage repose sur la réalisation d'une condition d'accord de phase dans le cristal qui est reliée à son orientation par rapport au faisceau. Le changement de longueur d'onde doit être rattrapé sur cet angle. Cette étape est réalisée de façon manuelle ou automatique.

En sortie du détecteur, le moyen de traitement 7 recevant le signal est un calculateur de type connu qui permet la mise en oeuvre des traitements selon l'invention.

L'homme du métier comprend aisément que les deux faisceaux pompe et signal peuvent également être générés par deux sources distinctes. Dans ce cas, les sources peuvent être elles-mêmes mobiles afin de générer la variation de chemin optique du signal de sonde par rapport au signal de pompe. Il est également possible d'utiliser une source laser à longueur d'onde fixe, et une source accordable.

Selon un second mode de réalisation, la source 1 permet de générer un continuum de lumière s'étendant sur une large gamme de longueur d'onde. Dans ce cas, le moyen de détection 6 peut comprendre un spectromètre (non représenté) destiné à analyser l'intensité de la lumière reçue avant de transmettre le signal à analyser au moyen de traitement 7. Tout système de filtres devant un photodétecteur usuel peut également être utilisé.

La pluralité de longueur d'onde est alors réalisée de façon continue, par exemple par un laser femtoseconde à longueur d'onde fixe associé à une fibre optique.

De façon générale, il est entendu que le type de source utilisé ne doit pas constituer une limitation à la présente invention et que tout type de source 1 permettant de générer des impulsions laser courtes correspondant à un ensemble discret ou continu de longueur d'onde peut être utilisé.

De même, dans tous les modes de réalisation, on peut utiliser tout moyen apte à produire un décalage temporel entre le premier faisceau pompe et le second faisceau sonde. Ce décalage peut donc être produit par une variation de chemin optique comme précédemment décrit, ou bien par un moyen permettant d'ajuster le temps d'arrivée d'une impulsion par rapport à une autre.

Au niveau des moyens de traitement 7, on stocke un modèle théorique de variation de l'amplitude de saut en fonction de la longueur d'onde.

Ce modèle théorique est obtenu à partir d'un modèle physique simple permettant de comprendre l'origine des sauts observés dans le signal en fonction de la longueur d'onde.

En effet, une couche transparente de la structure 5 agit comme un résonateur optique de type Pérot-Fabry pour la lumière sonde. En présence d'une impulsion de déformation la couche se comporte comme si son épaisseur était un peu plus petite ou un peu plus grande selon le signe de cette déformation. Si un saut apparaît à la réflexion de l'impulsion acoustique sur la surface libre c'est parce qu'elle devient extensive alors qu'elle était compressive. L'épaisseur changeant légèrement, la réflectivité du système interférométrique que constitue la couche transparente s'en ressent.

Il est possible d'établir une expression analytique du changement de réflectivité induit par un tel mécanisme. On écrit d'abord la réflectivité d'une couche mince transparente d'épaisseur finie e :

$$r = \frac{r_{01} + r_{12}e^{2ike}}{1 - r_{01}r_{12}e^{2ike}},$$

où $r_{01}$ (resp. $r_{12}$) désigne le coefficient de réflexion électromagnétique entre les milieux 0 et 1 (resp. 1 et 2), les indices 0, 1 et 2 correspondant de façon générale à une succession de couches 0, 1, et 2.

L'impulsion acoustique de déformation transporte une très faible variation d'épaisseur de la couche (notée $\Delta e$), ce qui nous autorise à écrire l'effet sur la réflectivité $\Delta r$ sous la forme :

$$\Delta r = \left(\frac{\partial r}{\partial e}\right)\Delta e$$

Plus précisément la quantité à laquelle nous accédons expérimentalement est le changement relatif de réflectivité en intensité :

$$\frac{\Delta R}{R} = 2\Re\left(\frac{\Delta r}{r}\right) = 2\Re\left(\frac{1}{r}\frac{\partial r}{\partial e}\right)\Delta e$$

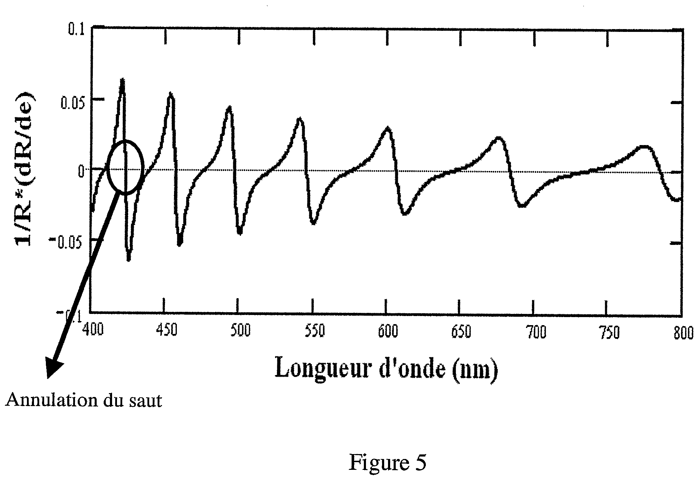

Ainsi l'effet physique qui nous intéresse découle de la dérivée de la réflectivité complexe de la couche transparente. À partir de ce résultat, nous pouvons tracer les changements attendus en fonction de la longueur d'onde de sonde comme illustré figure 5.

On note en particulier qu'en explorant le signe des sauts sur des plages de longueurs d'onde bien choisies il est possible de déterminer au moins une longueur d'onde d'annulation.

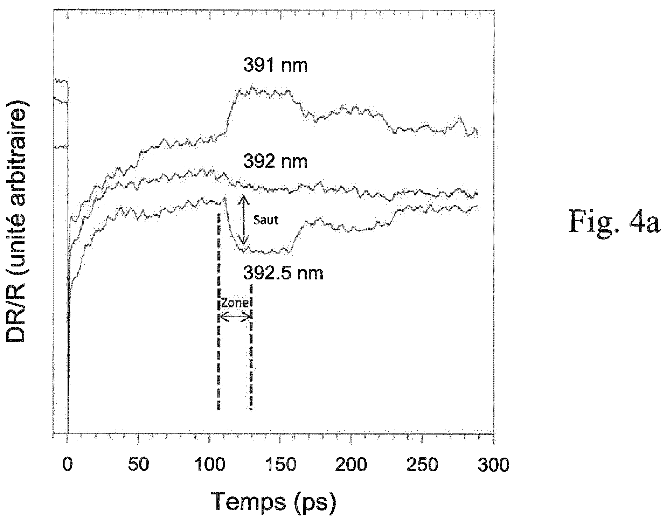

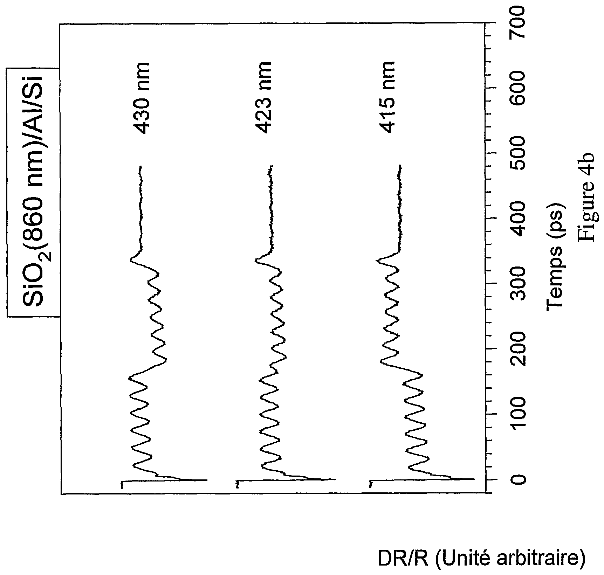

Selon l'invention, on fait donc varier la longueur d'onde du rayonnement de sonde et on détecte les annulations de l'amplitude des sauts du signal, ainsi que les changements de signes associés, comme illustré figures 4a et 4b. On note que la variation de l'amplitude des sauts tels que donnés sur les figures 4a et 4b représentant des résultats expérimentaux, est très sensible à la longueur d'onde, comme ceci est confirmé par la pente théorique au moment de l'annulation sur la figure 5.

Selon l'invention, la forte dépendance en longueur d'onde peut également être utilisée pour identifier plus clairement les sauts de réflectivité. Ainsi, une étape d'identification d'un saut d'amplitude peut comprendre elle-même une sous-étape de variation de la longueur d'onde. Cette étape d'identification peut facilement être implémentée par un test en fonction d'un seuil de variation d'amplitude sur un temps donné, éventuellement avec une variation de la longueur d'onde.

Ainsi, en comparant les annulations des sauts du signal obtenu après détection et le modèle théorique, on détermine une longueur d'onde caractéristique d'an-

nulation $\lambda_0$.

Or, selon le modèle adopté, le changement relatif de réflectivité en intensité $\dfrac{\Delta R}{R}$ n'est une fonction que de la $R$ longueur d'onde, de l'épaisseur de la couche transparente et de la vitesse de propagation de l'onde (ou de l'indice optique de la couche), et plus précisément, du produit de l'indice optique par l'épaisseur de la couche $n.e$.

La détermination de la longueur d'onde caractéristique d'annulation $\lambda_0$ permet donc d'obtenir une valeur caractéristique du produit de l'indice par l'épaisseur $(n.e)_0$.

Cette information supplémentaire sur les caractéristiques de la couche permet alors d'augmenter fortement la précision des résultats obtenus.

En effet, pour une zone d'oscillation de Brillouin, on mesure la période d'oscillation du signal. Par la formule connue $T(\lambda,n,e) = \dfrac{\lambda}{2nv\cos\theta}$, on obtient alors une première information sur l'indice et l'épaisseur en fonction de la longueur d'onde.

En se plaçant alors à la longueur d'onde caractéristique d'annulation, on fixe le produit $(n.e)_0$.

On peut mesurer également le temps d'oscillation pour les oscillations de Brillouin $t(e,v) = 2.\dfrac{e}{v}$ correspondant à un aller-retour de l'onde dans la couche, ce qui fournit une troisième information sur l'indice et l'épaisseur.

L'homme du métier comprendra alors aisément que la donnée du produit $(n.e)_0$ selon l'invention augmente fortement la précision des résultats sur les valeurs d'indice et d'épaisseur.

En particulier, le demandeur a montré que pour une structure de type AlN/Al/Ti/Si, par exemple dans un résonateur de type BAW (« Bulk Acoustic Wave »), la méthode proposée selon la présente invention permet de faire passer l'incertitude en épaisseur de 6% en l'absence de la détermination du produit $(n.e)_0$, à 0,17% avec cette détermination.

On peut noter également qu'il est possible de raffiner le modèle physique illustré figure 5 en faisant intervenir de nouveaux effets. En particulier, il est également possible d'affecter la réflectivité de la couche par le biais de l'indice optique (effet photo-élastique). Le saut de réflectivité détecté peut alors s'écrire comme la somme de deux contributions synchrones en longueur d'onde, c'est-à-dire que les inversions et les annulations se produisent simultanément.

Par ailleurs, nous avons décrit un exemple dans lequel la comparaison avec le modèle théorique était réalisée par rapport à un point d'annulation de l'amplitude de saut en fonction de la longueur d'onde, mais il est entendu que tout point ou caractéristique du modèle physique peut être utilisé. Ce peut donc être les maxima, la décroissance des maxima, l'écart entre deux zéros...

La présente invention concerne en particulier mais non exclusivement toute couche transparente sur substrat ou sur une couche absorbante. De façon plus générale, le signal de sonde doit être susceptible de « voir » les deux interfaces extrêmes d'une couche donnée. Ceci est donc réalisable sur une couche relativement absorbante, mais assez fine pour que le signal sonde atteigne l'extrémité la plus éloignée. De préférence, le signal de pompe doit également être absorbé en profondeur dans la structure.

Un exemple de mise en oeuvre a été donné pour une couche d'AlN dans un résonateur BAW, mais il est entendu que le dispositif selon l'invention fonctionne pour tout type de structure telle que précédemment définie.

Le procédé peut par exemple être utilisé pour la couche dite de loading en SiO2 qui est déposée sur l'électrode supérieure d'un composant.

Le demandeur a également pu caractériser des couches minces d'oxydes dit high-K de type SrTi03 et BaTiO3 en utilisant le procédé et le dispositif selon l'invention.

## Revendications

1. Dispositif de caractérisation d'une structure comprenant des moyens de génération (1,2) à impulsions d'un premier rayonnement électromagnétique de pompe et d'un second rayonnement électromagnétique de sonde, lesdits moyens de génération à impulsions desdits premier et second rayonnements étant aptes à délivrer des rayonnements de sonde à différentes longueurs d'onde, les rayonnements de sonde étant aptes à interagir avec au moins deux interfaces de couches de ladite structure, des moyens (3) pour produire un décalage temporel entre ledit second rayonnement de sonde et ledit premier rayonnement de pompe entre ledit moyen de génération de rayonnements et ladite structure, un moyen de détection (6) dudit second rayonnement de sonde après réflexion ou transmission sur ladite structure de façon à générer un signal à analyser, des moyens de traitement (7) dudit signal, **caractérisé en ce que** lesdits moyens de traitement (7) sont aptes à identifier une zone correspondant à un saut dudit signal, à déterminer l'amplitude dudit saut en fonction desdites différentes longueurs d'onde, à comparer ladite amplitude en fonction des longueurs d'onde à un modèle théorique de variation de l'amplitude en fonction de la longueur d'onde, de l'épaisseur de ladite structure et de la vitesse de propagation du rayonnement de sonde pour déterminer une longueur d'onde caractéristique dudit modèle théorique, et à déterminer, pour ladite longueur d'onde caractéristique, une valeur de caractérisation associée à l'épaisseur de ladite structure et à la vitesse de propagation de rayonnement de sonde au sein de ladite structure.

2. Dispositif selon la revendication 1 dans lequel les moyens de traitement sont en outre agencés pour explorer le signe du saut en fonction des différentes longueurs d'onde de sorte à déterminer au moins une longueur d'onde correspondant à une annulation de l'amplitude du saut.

3. Dispositif selon la revendication 2 dans lequel ladite longueur d'onde caractéristique dudit modèle théorique est déterminée en comparant les annulations des sauts dudit modèle théorique et ladite au moins une longueur d'onde précédemment déterminée correspondant à une annulation de l'amplitude du saut.

4. Dispositif selon l'une des revendications précédentes dans lequel la valeur de caractérisation associée à l'épaisseur de la structure et à la vitesse de propagation du rayonnement de sonde au sein de la structure est égale au produit entre cette épaisseur et l'indice optique de la structure.

5. Dispositif selon l'une des revendications précédentes, **caractérisé en ce que** lesdits moyens de génération à impulsions de rayonnements électromagnétiques à différentes longueurs d'ondes comprennent au moins une source laser accordable.

6. Dispositif selon l'une des revendications 1 à 4, **caractérisé en ce que** lesdits moyens de génération à impulsions de rayonnements électromagnétiques à différentes longueurs d'ondes comprennent au moins un moyen d'émission d'un continuum de lumière.

7. Dispositif selon l'une des revendications précédentes, **caractérisé en ce qu'**il comprend en outre un ensemble de moyens optiques adaptés pour transmettre lesdits rayonnements sur une gamme de longueur d'onde correspondant auxdites différentes longueurs d'onde.

8. Dispositif selon la revendication 5, **caractérisé en ce que** lesdits moyens de génération à impulsions de rayonnements électromagnétiques à différentes longueurs d'ondes comprennent deux sources laser accordables.

9. Dispositif selon la revendication 5, **caractérisé en ce que** lesdits moyens de génération à impulsions de rayonnements électromagnétiques à différentes longueurs d'ondes comprennent au moins une source laser fixe et une source laser accordable.

10. Procédé de caractérisation d'une structure comprenant les étapes consistant à :

- appliquer un premier rayonnement électromagnétique de pompe à impulsions au niveau de ladite structure ;
- appliquer un second rayonnement électromagnétique de sonde à impulsions au niveau de ladite structure, ledit second rayonnement de sonde étant décalé temporellement par rapport au premier rayonnement de pompe et apte à interagir avec au moins deux interfaces de couches de ladite structure ;
- détecter ledit second rayonnement après réflexion ou transmission au niveau de ladite structure et générer un signal représentatif dudit second rayonnement après réflexion ou transmission ;
- identifier un saut d'amplitude dans ledit signal ;
- faire varier la longueur d'onde dudit second rayonnement de façon à obtenir un premier profil de sauts en fonction de la longueur d'onde ;
- comparer ledit premier profil avec un second profil théorique dépendant de la longueur d'onde et de l'épaisseur et de l'indice optique de ladite structure pour déterminer une longueur d'onde caractéristique ;
- en déduire une valeur associée à l'épaisseur et à l'indice optique de ladite structure.

11. Procédé selon la revendication 10 comprenant une étape consistant à explorer le signe du saut en fonction des différentes longueurs d'onde de sorte à déterminer au moins une longueur d'onde correspondant à une annulation de l'amplitude du saut.

12. Procédé selon la revendication 11 dans lequel ladite longueur d'onde caractéristique dudit modèle théorique est déterminée en comparant les annulations des sauts dudit modèle théorique et ladite au moins une longueur d'onde précédemment déterminée correspondant à une annulation de l'amplitude du saut.

13. Procédé selon l'une des revendications 10 à 12 dans lequel la valeur associée à l'épaisseur et à l'indice optique de la structure est égale au produit entre cette épaisseur et cet indice optique.

**Patentansprüche**

1. Charakterisierungsvorrichtung einer Struktur, die Mittel zum Erzeugen (1, 2) mit Impulsen einer ersten elektromagnetischen Pumpstrahlung und einer zweiten elektromagnetischen Sondenstrahlung umfasst, wobei die Erzeugungsmittel mit Impulsen der ersten und zweiten Strahlung geeignet sind, Sondenstrahlung mit unterschiedlichen Wellenlängen zu liefern, wobei die Sondenstrahlungen geeignet sind, mit mindestens zwei Schichtenschnittflächen der Struktur zu interagieren, Mittel (3) zum Erzeugen einer zeitlichen Verschiebung zwischen der zweiten Sondenstrahlung und der ersten Pumpstrahlung zwischen dem Mittel zum Erzeugen von Strahlungen und der Struktur, ein Mittel zum Erfassen (6) der zweiten Sondenstrahlung nach Reflexion oder Übertragung auf die Struktur derart, dass ein zu analysierendes Signal erzeugt wird, Mittel zum Verarbeiten (7) des Signals, **dadurch gekennzeichnet, dass** die Verarbeitungsmittel (7) geeignet sind, eine Zone zu identifizieren, die einem Sprung des Signals entspricht, die Amplitude des Sprungs in Abhängigkeit von den unterschiedlichen Wellenlängen zu bestimmen, die Amplitude in Abhängigkeit von den Wellenlängen mit einem theoretischen Amplitudenvariationsmodell in Abhängigkeit von der Wellenlänge, der Stärke der Struktur und der Ausbreitungsgeschwindigkeit der Sondenstrahlung zu vergleichen, um eine charakteristische Wellenlänge des theoretischen Modells zu bestimmen, und für die charakteristische Wellenlänge einen Charakterisierungswert zu bestimmen, der mit der Stärke der Struktur und der Ausbreitungsgeschwindigkeit von Sondenstrahlung innerhalb der Struktur verbunden ist.

2. Vorrichtung nach Anspruch 1, wobei die Verarbeitungsmittel außerdem eingerichtet sind, um das Vorzeichen des Sprungs in Abhängigkeit von den unterschiedlichen Wellenlängen derart zu erforschen, dass mindestens eine Wellenlänge, die einer Annullierung der Amplitude des Sprungs entspricht, bestimmt wird.

3. Vorrichtung nach Anspruch 2, wobei die charakteristische Wellenlänge des theoretischen Modells unter Vergleichen der Annullierungen der Sprünge des theoretischen Modells und der mindestens einen zuvor bestimmten Wellenlänge, die eine Annullierung der Amplitude des Sprungs entspricht, bestimmt wird.

4. Vorrichtung nach einem der vorhergehenden Ansprüche, wobei der Charakterisierungswert, der mit der Stärke der Struktur und der Ausbreitungsgeschwindigkeit der Sondenstrahlung innerhalb der Struktur verbunden ist, gleich dem Produkt dieser Stärke und dem optischen Index der Struktur ist.

5. Vorrichtung nach einem der vorhergehenden Ansprüche, **dadurch gekennzeichnet, dass** die Erzeugungsmittel mit Impulsen elektromagnetischer Strahlungen mit unterschiedlichen Wellenlängen mindestens eine abstimmbare Laserquelle umfassen.

6. Vorrichtung nach einem der Ansprüche 1 bis 4, **dadurch gekennzeichnet, dass** die Erzeugungsmittel mit Impulsen elektromagnetischer Strahlungen mit unterschiedlichen Wellenlängen mindestens ein Mittel zum Senden eines Lichtkontinuums umfassen.

7. Vorrichtung nach einem der vorhergehenden Ansprüche, **dadurch gekennzeichnet, dass** sie außerdem eine Einheit optischer Mittel umfasst, die angepasst sind, um die Strahlungen auf einem Wellenlängenbereich, der den unterschiedlichen Wellenlängen entspricht, zu übertragen.

8. Vorrichtung nach Anspruch 5, **dadurch gekennzeichnet, dass** die Erzeugungsmittel mit Impulsen elektromagnetischer Strahlungen mit unterschiedlichen Wellenlängen zwei abstimmbare Laserquellen umfassen.

9. Vorrichtung nach Anspruch 5, **dadurch gekennzeichnet, dass** die Erzeugungsmittel mit Impulsen elektromagnetischer Strahlungen mit unterschiedlichen Wellenlängen mindestens eine fixe Laserquelle und eine abstimmbare Laserquelle umfassen.

10. Charakterisierungsverfahren einer Struktur, das die folgenden Schritte umfasst:

    - Anlegen einer ersten elektromagnetischen Pumpstrahlung mit Impulsen im Bereich der Struktur,
    - Anlegen einer zweiten elektromagnetischen Sondenstrahlung mit Impulsen im Bereich der Struktur, wobei die zweite Sondenstrahlung zeitlich in Bezug zu der ersten Pumpstrahlung versetzt und geeignet ist, mit mindestens zwei Schichtschnittstellen der Struktur zu interagieren,
    - Erfassen der zweiten Strahlung nach Reflexion oder Übertragung im Bereich der Struktur und Erzeugen eines Signals, das für die zweite Strahlung nach Reflexion oder Übertragung repräsentativ ist,
    - Identifizieren eines Amplitudensprungs in dem Signal,
    - Variierenlassen der Wellenlänge der zweiten Strahlung derart, dass ein erstes Sprüngeprofil in Abhängigkeit von der Wellenlänge erhalten wird,
    - Vergleichen des ersten Profils mit einem zweiten theoretischen Profil, das von der Wellenlänge und der Stärke sowie von dem optischen Index der Struktur abhängt, um eine charakteristische Wellenlänge zu bestimmen,
    - daraus einen Wert ableiten, der mit der Stärke und dem optischen Index der Struktur verbunden ist.

**11.** Verfahren nach Anspruch 10, das einen Schritt umfasst, der darin besteht, das Vorzeichen des Sprungs in Abhängigkeit von den unterschiedlichen Wellenlängen derart zu erforschen, dass mindestens eine Wellenlänge bestimmt wird, die einer Annullierung der Amplitude des Sprungs entspricht.

**12.** Verfahren nach Anspruch 11, wobei die charakteristische Wellenlänge des theoretischen Modells durch Vergleichen der Annullierungen der Sprünge des theoretischen Modells mit der mindestens einen Wellenlänge, die zuvor bestimmt wurde, die einer Annullierung der Amplitude des Sprungs entspricht, bestimmt wird.

**13.** Verfahren nach einem der Ansprüche 10 bis 12, wobei der Wert, der mit der Stärke und mit dem optischen Index der Struktur verbunden ist, gleich dem Produkt zwischen dieser Stärke und diesem optischen Index ist.

**Claims**

**1.** A device for characterising a structure comprising pulse generation means (1,2) of a first electromagnetic pump radiation and a second electromagnetic probe radiation, said pulse generation means of said first and second radiations being suitable for delivering probe radiations at different wavelengths, the probe radiations being suitable for interacting with at least two layer interfaces of said structure, means (3) for producing a time lag between said second probe radiation and said first pump radiation between said radiation generation means and said structure, detection means (6) of said second probe radiation after reflection or transmission on said structure so as to generate a signal to be analysed, processing means (7) of said signal, **characterised in that** said processing means (7) are suitable for identifying a zone corresponding to a skip of said signal, determining the amplitude of said skip according to said different wavelengths, comparing said amplitude according to the wavelengths to a theoretical model of variation of the amplitude according to the wavelength, the thickness of said structure and the propagation rate of the probe radiation to determine a characteristic wavelength of said theoretical model, and determining, for said characteristic wavelength, a characterisation value associated with the thickness of said structure and with the probe radiation propagation rate within said structure.

**2.** The device according to claim 1 wherein the processing means are further arranged for examining the sign of the skip according to the different wavelengths so as to determine at least one wavelength corresponding to a skip amplitude cancellation.

**3.** The device according to claim 2 wherein said characteristic wavelength of said theoretical model is determined by comparing the cancellations of the skips of said theoretical model and said at least one wavelength previously determined corresponding to a skip amplitude cancellation.

**4.** The device according to one of the preceding claims wherein the characterisation value associated with the thickness of the structure and with the propagation rate of the probe radiation within the structure is equal to the product between this thickness and the optical index of the structure.

**5.** The device according to one of the preceding claims, **characterised in that** said pulse generation means of electromagnetic radiations at different wavelengths comprise at least one tuneable laser source.

**6.** The device according to one of claims 1 to 4, **characterised in that** said pulse generation means of electromagnetic radiations at different wavelengths comprise at least one light continuum emission means.

**7.** The device according to one of the preceding claims, **characterised in that** it further comprises a set of optical means suitable for transmitting said radiations over a wavelength range corresponding to said different wavelengths.

**8.** The device according to claim 5, **characterised in that** said pulse generation means of electromagnetic radiations at different wavelengths comprise two tuneable laser sources.

**9.** The device according to claim 5, **characterised in that** said pulse generation means of electromagnetic radiations at different wavelengths comprise at least one fixed laser source and one tuneable laser source.

**10.** A method for characterising a structure comprising steps consisting of:

- applying a first pulsed electromagnetic pump radiation at the level of said structure;
- applying a second pulsed electromagnetic probe radiation at the level of said structure, said second probe radiation being temporally offset with respect to the first pump radiation and suitable for interacting with at least two layer interfaces of said structure;
- detecting said second radiation after reflection or transmission at the level of said structure and generating a representative signal of said second radiation after reflection or transmission;
- identifying an amplitude skip in said signal;
- varying the wavelength of said second radiation so as to obtain a first skip profile according to the wavelength;
- comparing said first profile with a second theoretical profile dependent on the wavelength and the thickness and on the optical index of said structure to determine a characteristic wavelength;
- inferring a value associated with the thickness and with the optical index of said structure.

11. The method according to claim 10 comprising a step consisting in examining the sign of the skip according to the different wavelengths so as to determine at least one wavelength corresponding to a skip amplitude cancellation.

12. The method according to claim 11 wherein said characteristic wavelength of said theoretical model is determined by comparing the cancellations of the skips of said theoretical model and said at least one wavelength previously determined corresponding to a skip amplitude cancellation.

13. The method according to one of claims 10 to 12 wherein the value associated with the thickness and with the optical index of the structure is equal to the product between this thickness and this optical index.

Figure 1 (Art antérieur)

*Séparatrice*

Pompe

*Laser femto*

*Miroir*

Sonde

*Asservissement en position*

c = 300 000 km/s
30 cm → 1 ns

*Focalisation*

*Photodiode*

*Echantillon*

EP 1 893 976 B1

Figure 2

Figure 3

EP 1 893 976 B1

Fig. 4a

Figure 4b

SiO₂(860 nm)/Al/Si

430 nm

423 nm

415 nm

Temps (ps)

DR/R (Unité arbitraire)

Figure 5

EP 1 893 976 B1

Figure 6

*Asservissement en position*

c = 300 000 km/s
30 cm → 1 ns

EP 1 893 976 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5748318 A

**Littérature non-brevet citée dans la description**

- Evidence of Laser-Wavelength effect in Picosecond Ultrasonics : Possible connection with interband transition. *Physics Review Letters,* 12 Mars 2001, vol. 86 (12

- **A. DEVOS ; G. CARUYER ; C. ZINCK ; P. ANCEY.** A novel approach using picosecond ultrasonics at variable laser-wavelength for the characterization of AlN films used for microsystem applications. *World Congress on Ultrasonics,* 07 Septembre 2003, ISBN 2-9521105-0-6, 793-796
- **O. B. WRIGHT ; T. HYOGUCHI.** Ultrafast vibration and laser acoustics in thin transparent films. *Optics Letters,* 1991, vol. 16, 1529